# EUROPEAN PATENT APPLICATION

(11) **EP 1 344 679 A2**
(43) Date of publication of application: **17.09.2003**
(21) Application number: 03380059.0
(22) Date of filing: 14.03.2003
(51) Int. Cl.: B60N 2/28

(54) **Child seat for vehicles**

(30) Priority: 14.03.2002 ES 200200602
(71) Applicant: Play, S.A., 08184 Palau de Plegamans (ES)
(72) Inventor: Jane Stopp, Joaquim, 08184 Palau de Plegamans (ES)
(74) Representative: Ponti Sales, Adelaida

(57) **Abstract**

The child seat is characterised in that it comprises means (3, 4) for adjusting the position of said child seat (1) in relation to said lower frame (2).

Said means of adjustment comprise a threaded rod (3) provided with a knob (4), and said threaded rod (3) is situated between the lower frame (2) and the child seat (1), so that the rotation of said rod (3) through said knob (4) causes displacement of the child seat (1) in relation to the lower frame (2).

It enables easily adjusting the position of the child seat of the invention in relation to the vehicle seat.

## Description

The present invention refers to a child seat for vehicles, which enables easily adjusting the position of the child seat on the vehicle seat.

### BACKGROUND OF THE INVENTION

It is obligatory for children to travel in vehicles in child safety seats especially designed for this purpose.

Some of these child seats are fastened to the vehicle seat using the vehicle seat belt, which is often complicated and awkward, especially if you are not used to doing it.

There are also other child seats that are fastened to the vehicle seat by clamps which are detachably engaged to a bar provided on said seat.

The drawback of this kind of fastening is that the position of the child seat on the vehicle seat can not be adjusted.

### DESCRIPTION OF THE INVENTION

With the child seat of the invention, said drawbacks are resolved, and it has other advantages which will be described.

The child seat of the present invention comprises a lower frame for its detachable fastening to a vehicle seat, and it is characterised in that it comprises means for adjusting the position of said child seat in relation to said lower frame.

Thanks to this characteristic, the position of the child seat of the invention can be easily adjusted in relation to the vehicle seat.

According to a preferred embodiment, said means of adjustment comprise a threaded rod provided with a knob, and said threaded rod is situated between the lower frame and the child seat, so that the rotation of said rod through said knob causes displacement of the child seat in relation to the lower frame.

Said lower frame preferably comprises a couple of clamps that are attached to a bar provided on the vehicle seat.

If desired, the child seat of the invention may comprise an intermediate frame linked to said lower frame, using the intermediate frame for detachable fastening of the child seat, so that the rotation of said rod through said knob causes displacement of the intermediate frame, and consequently of the child seat, in relation to the lower frame.

### BRIEF DESCRIPTION OF THE DRAWINGS

For a better understanding of the abovementioned, some drawings are attached in which, schematically and only by way of a non-limitative example, a practical case of embodiment is represented.

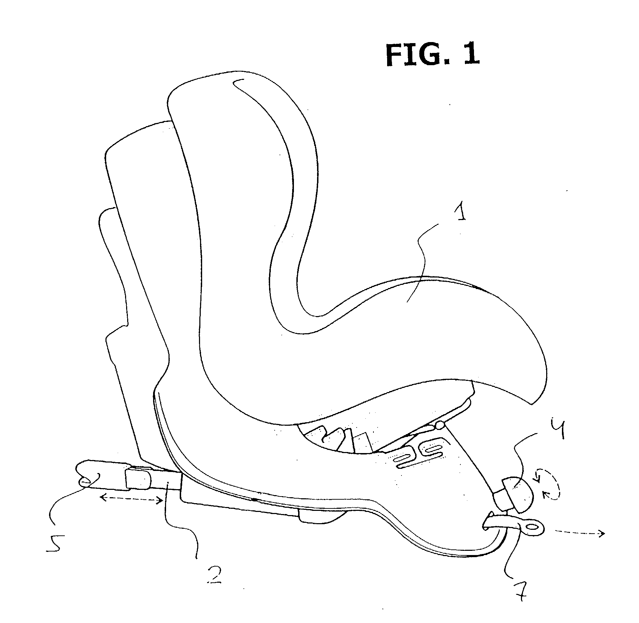

Figure 1 is a side view of a child seat according to the present invention;

Figure 2 is a view from below of the child seat of the present invention, in a first position;

Figure 3 is a view from below of the child seat of the present invention, in a second position;

Figure 4 is a view in perspective of the lower element of the child seat of the present invention, according to an alternative embodiment, in a first position; and

Figure 5 is a perspective view of the lower element represented in figure 4, in a second position.

### DESCRIPTION OF A PREFERRED EMBODIMENT

As shown by the figures, the child seat 1 comprises a lower frame 2 provided with clamps 5 for its detachable engagement to a vehicle seat (not shown).

These clamps 5 are engaged by pressure to a bar provided on the vehicle seat, and they can be disengaged by pulling the tape 7.

According to the invention, the lower frame 2 comprises means for adjusting the position of the child seat 1 on the vehicle seat. In fact, these means of adjustment are formed by a threaded rod 3, situated between the child seat 1 and said lower frame 2, provided with a drive knob 4, so that when said knob 4 is turned, the child seat 1 moves on said lower frame 2.

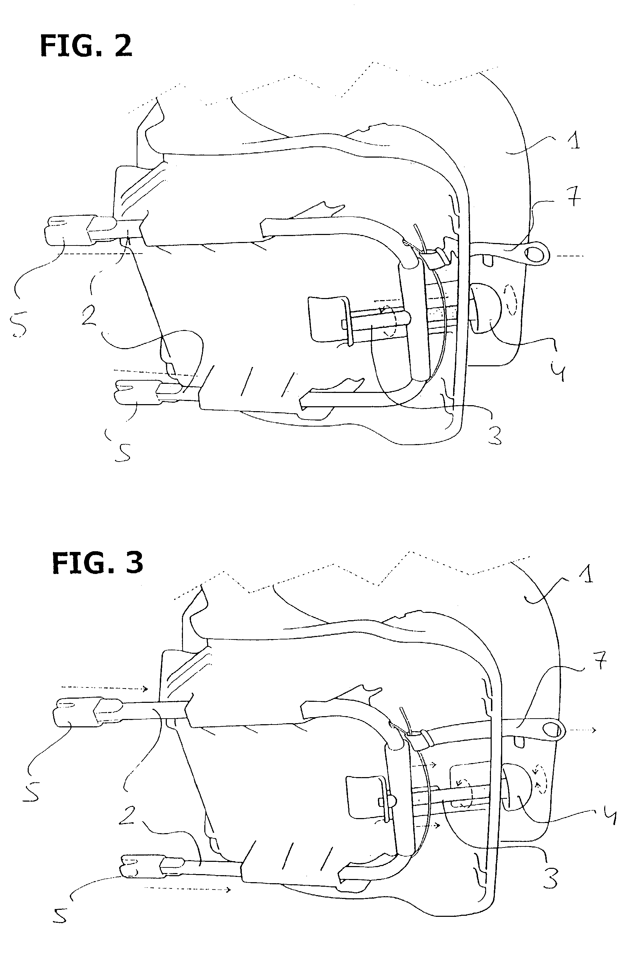

Figures 2 and 3 show two positions of the child seat 1 in relation to the lower frame 2.

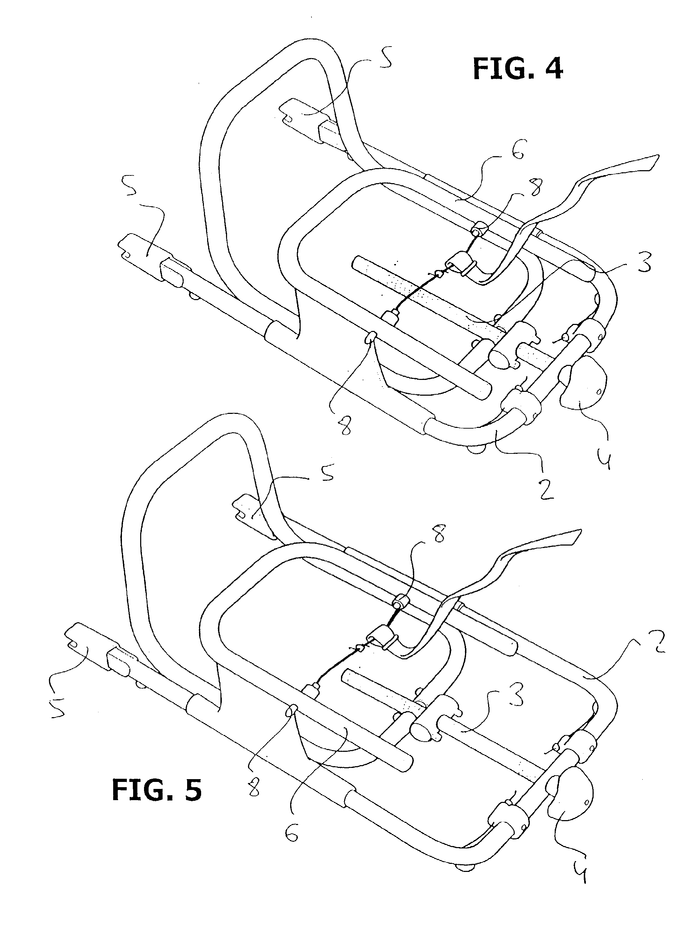

Figures 4 and 5 show an alternative embodiment of the child seat 1 of the present invention. In this case, the child seat 1 comprises an intermediate frame 6 linked to said lower frame 4. The intermediate frame 6 is used for detachable fastening of the child seat 1.

This embodiment also provides the threaded rod 3 provided with the drive knob 4, so that the rotation of said rod 3 through said knob 4 causes displacement of the intermediate frame 6, and consequently of the child seat 1, in relation to the lower frame 2.

According to this embodiment, the child seat 1 is detachably engaged to said intermediate frame 6 by means of moveable projections 8 that are placed into slots provided on the child seat 1.

Although reference has been made to a specific embodiment of the invention, it is obvious to a person skilled in the art that the fastening system disclosed is open to many variations and modifications, and that all the details mentioned may be substituted by other technically equivalent ones, without departing from the scope of protection defined by the attached claims.

## Claims

1. Child seat (1), which comprises a lower frame (2) for its detachable fastening to a vehicle seat, **characterised in that** it comprises means (3, 4) for adjusting the position of said child seat (1) in relation to said lower frame (2).

2. Child seat according to claim 1, **characterised in that** said means of adjustment comprise a threaded rod (3) provided with a knob (4), and said threaded rod (3) is situated between the lower frame (2) and the child seat (1), so that the rotation of said rod (3) through said knob (4) causes displacement of the child seat (1) in relation to the lower frame (2).

3. Child seat according to claim 1 or 2, **characterised in that** said lower frame (2) comprises a couple of clamps (5) that are engaged to a bar provided on the vehicle seat.

4. Child seat according to claim 2, **characterised in that** it comprises an intermediate frame (6) linked to said lower frame (4), using the intermediate frame (6) for detachable fastening of the child seat (1), so that the rotation of said rod (3) through said knob (4) causes displacement of the intermediate frame (6), and consequently of the child seat (1), in relation to the lower frame (2).
